# EUROPEAN PATENT SPECIFICATION

(11) **EP 3 584 452 B1**
(45) Date of publication and mention of the grant of the patent: **07.06.2023**
(21) Application number: 18753644.6
(22) Date of filing: 13.02.2018
(51) Int. Cl.: F16B 11/00, B60R 16/02, B60T 8/34, H02G 3/14, H02G 3/16, H05K 5/06, B29C 65/48, B29C 65/00

(54) **RESINOUS COMPONENT**
HARZARTIGE KOMPONENTE
COMPOSANT RÉSINEUX

(30) Priority: 17.02.2017 JP 2017028511
(43) Date of publication of application: 25.12.2019
(73) Proprietor: Hitachi Astemo, Ltd., Hitachinaka-shi, Ibaraki (JP)
(72) Inventor: CHIBA, Kentaro, Tomi-city Nagano 389-0514 (JP); YAMAGAMI, Takumi, Tomi-city Nagano 389-0514 (JP); OBINATA, Naoto, Tomi-city Nagano 389-0514 (JP)
(74) Representative: Hoefer & Partner Patentanwälte mbB
(86) International application number: PCT/JP2018/004783
(87) International publication number: WO 2018/151064

(56) References cited:
- GB-A- 2 043 761
- JP-A- 2013 115 276
- JP-A- 2013 115 276
- JP-A- 2014 061 629
- JP-A- 2014 061 629
- JP-A- 2014 086 644
- JP-A- 2014 086 644
- US-A- 6 021 753
- US-A1- 2002 122 302

## Description

### Technical Field

The present invention relates to a resinous component that prevents an adhesive from entering an inside thereof.

### Background Art

A control device that includes a base body, a housing attached to the base body, and a cover attached to the housing is known.

In the control device described above, drip-proof treatment is applied to a fixing portion between the housing and the base body and an attachment portion between the housing and the cover to prevent water or the like from entering the inside through the fixing portion and the attachment portion.

For example, in Japanese Patent No. 4892527 (referred to below as PTL 1), an annular groove is provided in the housing and an adhesive is applied as a drip-proof treatment.

When an adhesive is applied to a groove shape as described in PTL 1, an adhesive may protrude onto the inner surface of the housing during assembly and the adhesive may enter the inside of the housing.

However, since a resinous housing accommodates a control board and electric components that are precision parts, it is necessary to prevent the adhesive from entering the inside of the housing so as not to affect these components.

In addition, for example, the technique disclosed in Japanese Patent No. 4520915 (referred to below as PTL 2) is present as the sealing structure of a control device. In the sealing structure disclosed in PTL 2, a groove is provided in a part of a housing close to a base body and this groove is filled with a sealing agent.

In addition, for example, the technique disclosed in Japanese Patent No. 5901725 (referred to below as PTL 3) is present. In the sealing structure described in PTL 3, an adhesive is provided between a housing and a cover.

In addition, for example, the technique disclosed in JP-A-2014-184744 (referred to below as PTL 4) is present. In the sealing structure described in PTL 4, a seal is provided between a base body and a housing and the seal is provided in a sealing groove formed in the housing.

When an adhesive is applied between the base body and the housing, interface peeling may occur between the housing and the adhesive and sealing effects may not be exerted sufficiently.

JP 2013-115276 A describes a metal substrate which has conductor wiring which is formed, via an insulator layer made of resin, on a top face of a base made of metal. A mold case houses the metal substrate and electronic components, and a bus bar and a terminal for electrical connection to the outside are insert-molded therein. The metal substrate is configured such that the metal base constituted by a conductive member does not come into contact with a grounded conductive member around a vehicle and is bonded and fixed to the mold case constituted by an insulation member, while the base of the metal substrate is electrically ungrounded. The metal substrate is bonded and fixed to an end face of the mold case, and the base surface of the metal substrate is exposed to the atmosphere outside the mold case.

JP 2014-061629 A describes a decorative body with rhinestones made by bonding a plurality of rhinestones on a substrate. The decorative body is constructed by: forming rough surfaces corresponding to sizes and shapes of the rhinestones in a predetermined layout on a surface of the substrate by laser processing; forming contour grooves having a processed depth deeper than the rough surfaces at the edges of the rough surfaces; and placing and bonding the rhinestones on the rough surfaces.

JP 2014-086644 A describes a waterproof structure of a housing for incorporating an electronic component which includes a housing consisting of a first case, and a second case having a groove to be applied with an adhesive in the surface facing the first case, and an electronic component to be incorporated in the housing. The first case is provided, in the surface facing the second case, with a protrusion which comes into contact with the adhesive by intruding into the groove, when the first case and second case are attached to the surface facing the second case.

US 2002/0122302 A1 describes a night vision binocular assembly capable of converting low light and infrared energy into a visible image. The night vision binocular assembly includes at least one objective lens assembly, image intensifier tube, collimator lens assembly and diopter cell assembly encased in an easy to assemble waterproof housing.

### Citation List

### Patent Literature

PTL 1: Japanese Patent No. 4892527
PTL 2: Japanese Patent No. 4520915
PTL 3: Japanese Patent No. 5901725
PTL 4: JP-A-2014-184744

### Summary of Invention

### Technical Problem

An object of the invention is to provide a resinous component having a structure that prevents an adhesive from entering the inside of a housing.

### Solution to Problem

This object is solved by the features of the independent claim. The dependent claims contain advantageous embodiments of the present invention.

### Advantageous Effects of Invention

When the housing is assembled to the base body, the adhesive enters the small gap. Since the excess portion of the adhesive is collected in the small gap, there is no concern that the adhesive enters the inside of the housing.

An anchor effect of putting the adhesive onto the coarse surface is exerted. This anchor effect prevents the adhesive from peeling from the surface of the lower groove, thereby improving the bonding performance of the adhesive.

When the cover is assembled to the housing, the adhesive is surely attached to the insertion protrusion of the cover. In addition, since the inner-side gap on the inner side of the insertion protrusion is larger than the outer-side gap on the outer side of the insertion protrusion, the adhesive can be collected in the inner-side gap. As a result, it is possible to prevent the adhesive from entering the inside of the housing.

The projection provided on the insertion protrusion comes in contact with the outer-side wall surface of the top groove, so it is possible to prevent a rattle when the cover is attached to the housing.

### Brief Description of Drawings

[Fig. 1] Fig. 1 is a basic structure diagram illustrating a dual-circuit vehicle brake fluid pressure control device according to the invention.
[Fig. 2] Fig. 2 is a cross sectional view illustrating the dual-circuit vehicle brake fluid pressure control device.
[Fig. 3] Fig. 3 is an enlarged view (used to describe an adhesive collecting part) illustrating a section 3c in Fig. 2.
[Fig. 4] Fig. 4 illustrates a modification of the adhesive collecting part.
[Fig. 5] Fig. 5 illustrates another modification of the adhesive collecting part.
[Fig. 6] Fig. 6 is a perspective view illustrating main parts of a housing and a cover.
[Fig. 7] Fig. 7 is an enlarged view (used to describe a coarse surface) illustrating a section 7b in Fig. 2.

### Description of Embodiments

An embodiment of the invention will be described with reference to the attached drawings.

It is assumed that a control device that controls the fluid pressures of a front wheel brake and a rear wheel brake is referred to as a dual-circuit vehicle brake fluid pressure control device and a control device that controls the fluid pressure of one of the front wheel brake and the rear wheel brake is referred to as a single-circuit vehicle brake fluid pressure control device.

### Embodiment

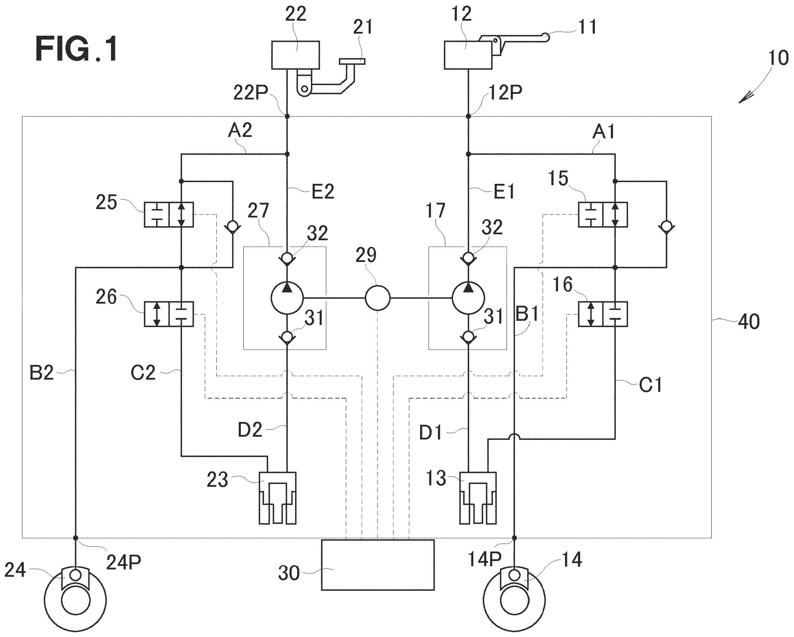

As illustrated in Fig. 1, a dual-circuit vehicle brake fluid pressure control device 10 includes a first master cylinder 12, a first reservoir 13, a first inlet control valve 15 that is a normally open solenoid valve, a first outlet control valve 16 that is a normally closed solenoid valve, a first pump 17, a second master cylinder 22, a second reservoir 23, a second inlet control valve 25 that is a normally open solenoid valve, a second outlet control valve 26 that is a normally closed solenoid valve, a second pump 27, a motor 29 that drives the first and second pumps 17 and 27, a control device 30 that controls the driving of the motor 29 and controls the opening and closing of the first and second inlet control valves 15 and 25 and the first and second outlet control valves 16 and 26, brake fluid lines A1, B1, C1, D1, and E1 of a first circuit and brake fluid lines A2, B2, C2, D2, and E2 of a second circuit that are provided in a base body 40 and through which a brake fluid flows.

The first master cylinder 12 pressurizes a hydraulic fluid in accordance with an operation of a brake lever 11 to produce a fluid pressure.

The first reservoir 13 temporarily reserves the hydraulic fluid released from a front wheel brake caliper 14.

The first inlet valve 15 and the first outlet control valve 16 are assembly components provided between the first master cylinder 12 and the front wheel brake caliper 14.

The first pump 17 is an assembly component that sucks the hydraulic fluid reserved in the first reservoir 13 and returns the hydraulic fluid to the first master cylinder 12.

The second master cylinder 22 pressurizes the hydraulic fluid in accordance with an operation of a brake pedal 21 to produce a fluid pressure.

The second reservoir 23 temporarily reserves the hydraulic fluid released from a rear wheel brake caliper 24.

The second inlet control valve 25 and the second outlet control valve 26 are assembly components provided between the second master cylinder 22 and the rear wheel brake caliper 24.

The second pump 27 is an assembly component that sucks the hydraulic fluid reserved in the second reservoir 23 and returns the hydraulic fluid to the second master cylinder 22.

The suction sides of the first and second pumps 17 and 27 are provided with suction valves 31 and the discharge sides are provided with discharge valves 32.

In addition, the base body 40 includes an inlet port 12P to which the fluid line (brake piping) extending from the first master cylinder 12 is connected, an inlet port 22P to which the fluid line (brake piping) extending from the second master cylinder 22 is connected, an outlet port 14P to which the fluid line (brake piping) extending to the front wheel brake caliper 14 is connected, and an outlet port 24P to which the fluid line (brake piping) extending to the rear wheel brake caliper 24 is connected.

The brake fluid line A1 is the fluid line from the inlet port 12P to the first inlet control valve 15 and the brake fluid line B1 is the fluid line from the first inlet control valve 15 to the outlet port 14P.

The brake fluid line C1 is the fluid line from the brake fluid line B1 to the first reservoir 13 and the brake fluid line D1 is the fluid line from the first reservoir 13 to the first pump 17.

The brake fluid line E1 is the fluid line from the first pump 17 to the brake fluid line A1.

The brake fluid lines A2, B2, C2, D2, and E2 are not described to eliminate duplicate descriptions.

Next, the operation of the vehicle brake fluid pressure control device 10 will be described. It should be noted here that since the operation of the first circuit from the brake lever 11 to the front wheel brake caliper 14 is the same as the operation of the second circuit from the brake pedal 21 to the rear wheel brake caliper 24, only the first circuit will be described.
- ABS non-operating state: When there is no concern that the front wheels lock, the control device 30 stops the first pump 17, opens the first inlet control valve 15, and closes the first outlet control valve 16. When the brake lever 11 is operated to the braking side in this state, the fluid pressure of the first master cylinder 12 increases and this fluid pressure is transferred to the front wheel brake caliper 14 via the first inlet control valve 15.
- ABS (reducing pressure mode): When the front wheels almost lock, the control device 30 closes the first inlet control valve 15 and opens the first outlet control valve 16. The fluid pressure in the front wheel brake caliper 14 is released to the first reservoir 13 via the first outlet control valve 16. This reduces the brake fluid pressure of the front wheel brake caliper 14.
- ABS (hold mode): The control device 30 closes both the first inlet control valve 15 and the first outlet control valve 16. This holds the brake fluid pressure of the front wheel brake caliper 14 at a constant value.
- ABS (increasing pressure mode): When the brake fluid pressure is increased, the control device 30 opens the first inlet control valve 15 and closes the first outlet control valve 16. This transfers the fluid pressure produced in the master cylinder 12 to the front wheel brake caliper 14. As a result, the brake fluid pressure of the front wheel brake caliper 14 is increased.

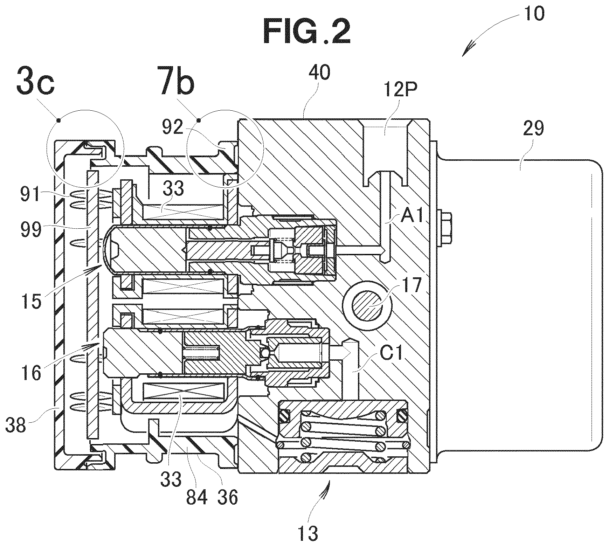

As illustrated in Fig. 2, the solenoid valve 15 as the first inlet control valve and the solenoid valve 16 as the first outlet control valve are attached to the base body 40. In addition, the base body 40 has the first reservoir 13 therein, the brake fluid line A1 and C1 and the like, and the first pump 17 between the brake fluid line A1 and the brake fluid line C1.

Approximately the halves of the solenoid valve 15 and the solenoid valve 16 in the axial direction project from the base body 40 and these projecting parts are accommodated in a resinous component 36. The resinous component 36 is read as the housing 36 below. The solenoid valve 15 and the solenoid valve 16 have electromagnetic coils 33 for driving.

The housing 36 has openings on the front side (side of a cover 38) and the back side (side of the base body 40) and has a peripheral wall part 84 in which a control board 99 is accommodated.

The control board 99 is disposed in the housing 36 and the control board 99 is electrically connected to the electromagnetic coils 33 via terminals 91.

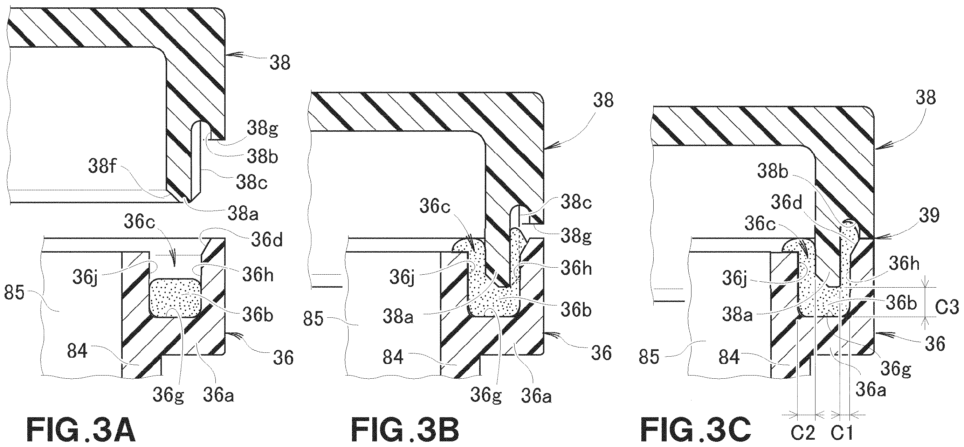

An enlarged view of a section 3c in Fig. 2 is illustrated in Fig. 3(c).

As illustrated in Fig. 3(a), an attachment part 36a to which the cover 38 is attached is formed in the housing 36 and an annular top groove 36c to be filled with an adhesive 36b is formed in the attachment part 36a.

In addition, the cover 38 is box-shaped and has a protrusion (referred to below as an insertion protrusion) 38a, formed along the outer periphery of the cover 38, that projects to one side. In addition, the cover 38 has a contacting surface 38g that comes in contact with the attachment part 36a of the housing 36 on the outer side of the insertion protrusion 38a.

The top groove 36c includes a bottom surface 36g, an outer-side wall surface 36h that rises from one end of the bottom surface 36g on the outer side of the insertion protrusion 38a, and an inner-side wall surface 36j that rises from the other end of the bottom surface 36g on the inner side of the insertion protrusion 38a.

As illustrated in Fig. 3(c), when the cover 38 is assembled to the housing 36, the cover 38 comes in contact with the attachment part 36a in a contacting part 39 present on the outer side of the insertion protrusion 38a.

When the cover 38 is assembled to the housing 36, an outer-side gap C1 is provided between the insertion protrusion 38a and the outer-side wall surface 36h of the top groove 36c, an inner-side gap C2 is provided between the insertion protrusion 38a and the inner-side wall surface 36j of the top groove 36c, and a bottom-side gap C3 is provided between the insertion protrusion 38a and the bottom surface 36g of the top groove 36c.

Furthermore, the inner-side gap C2 is larger than the outer-side gap C1.

In the state in which the cover 38 is assembled to the housing 36, since the inner-side gap C2, the outer-side gap C1, and the bottom-side gap C3 are filled with the adhesive 36b, the adhesive 36b is attached to the periphery of the insertion protrusion 38a. This attachment improves the bonding performance between the insertion protrusion 38a and the adhesive 36b.

In addition, since the inner-side gap C2 is larger than the outer-side gap C1, the adhesive 36b is collected in the inner-side gap C2 and there is no concern that the adhesive 36b enters the inner side of the peripheral wall part (insertion protrusion 38a), that is, the inside of the housing 36.

Preferably, as illustrated in Fig. 3(b), long projections 38c that come in contact with the outer-side wall surface 36h of the top groove 36c are formed on the outer side of the insertion protrusion 38a. The projections 38c only need to be formed in about two positions on the insertion protrusion 38a extending in the front and back direction of the drawing sheet. Even when the projections 38c are provided, the cover 38 does not become heavier.

The insertion protrusion 38a is inserted into the top groove 36c when the cover 38 is attached to the housing 36, and the projections 38c come in contact with the outer-side wall surface 36h of the top groove 36c at this time. As a result, it is possible to prevent a rattle when the cover 38 is attached to the housing 36.

It should be noted here that, when the amount of the adhesive 36b fed to the top groove 36c is appropriate, it is possible to prevent the adhesive 36b from entering the inner side of the peripheral wall part (insertion protrusion 38a) in the structure in Fig. 3(a).

As illustrated in Fig. 3(c), a collecting groove 38b having a U-shaped cross section is provided in the cover 38 above the outer-side gap C1. Since the adhesive 36b is collected in this collecting groove 38b, there is no concern that the adhesive 36b protrudes to the outer side of the housing 36.

Preferably, a second collecting groove 36d is provided in the attachment part 36a so that the upper part of the outer-side gap C1 is widened upward and outward. The groove width of the collecting groove 38b can also be widened by providing the second collecting groove 36d.

The second collecting groove 36d and the collecting groove 38b increase the storage amount of the excess portion of the adhesive 36b and more preferably prevent the protrusion of the adhesive 36b to the outer side of the housing 36.

As illustrated in Fig. 3(a), the cover 38 to be provided for the housing 36 has the insertion protrusion 38a projecting in one direction (toward the housing 36) in the outer periphery of the cover 38, the collecting groove 38b in which resin is collected in this insertion protrusion 38a, and the projections 38c extending upward and downward. In addition, the attachment part 36a to which the cover 38 is attached is formed in the peripheral wall part 84 that surrounds a board accommodation part 85, and the attachment part 36a is provided with the top groove 36c that is filled with the adhesive 36b and into which the insertion protrusion 38a is inserted.

The insertion protrusion 38a is provided with the projections 38c so that the projections 38c make slidable contact with the inner surface of the top groove 36c when the cover 38 is attached. When the cover 38 tries to move in the horizontal direction, the cover 38 cannot move in the horizontal direction since the projections 38c come in contact with the inner surface of the top groove 36c. As a result, it is possible to prevent a rattle when the cover 38 is attached to the housing 36.

A tapered surface 38f is provided at the lower end part of the insertion protrusion 38a to form the lower end of the insertion protrusion 38a in a pointed shape. This shape enables the insertion protrusion 38a to be smoothly accommodated in the top groove 36c and to smoothly thrust the adhesive 36b.

When the adhesive 36b is placed in the top groove 36c and the cover 38 is lowered, the insertion protrusion 38a is inserted into the top groove 36c. As illustrated in Fig. 3(b), the adhesive 36b is pushed by the insertion protrusion 38a and partially moves to the outside of the peripheral wall part 84 or the inside of the peripheral wall part 84.

As illustrated in Fig. 3(c), since the adhesive 36b flows into the collecting groove 38b, the adhesive 36b does not protrude onto the outer surface of the housing 36.

It is desirable to increase the cross sectional areas of the collecting groove 38b and the second collecting groove 36d by providing the second collecting groove 36d in the housing 36.

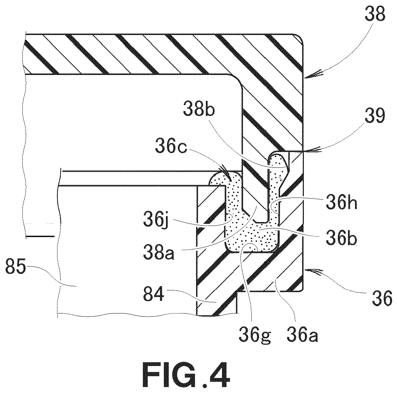

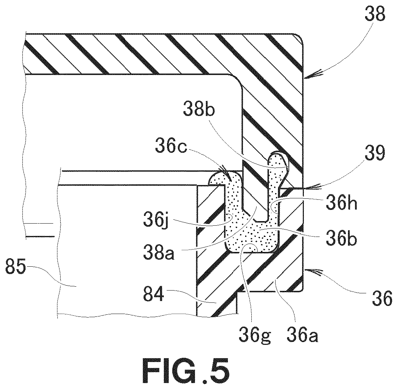

Next, modifications will be described with reference to Fig. 4 and Fig. 5.

As illustrated in Fig. 4, the collecting groove 38b may be formed in the top groove 36c in the attachment part 36a of the housing 36. Since the structure other than this is the same as in Fig. 3, reference numerals in Fig. 3 are used and detailed descriptions are omitted.

As illustrated in Fig. 5, the collecting groove 38b may be formed in the cover 38. Since the structure other than this is the same as in Fig. 3, reference numerals in Fig. 3 are used and detailed descriptions are omitted.

As described above, the collecting groove 38b may be provided in the housing 36, provided in the cover 38, or provided across the housing 36 and the cover 38.

That is, the collecting groove 38b may be provided in the top groove 36c of the attachment part 36a of the housing 36 or provided between the insertion protrusion 38a of the cover 38 and the contacting part 39.

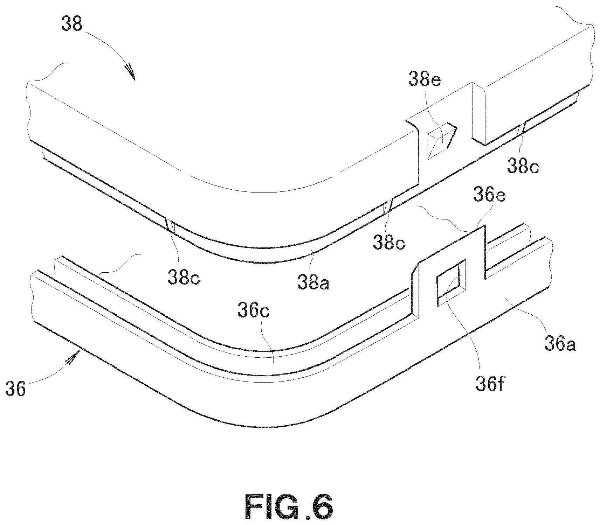

As illustrated in Fig. 6, a projecting part 36e is formed so as to project from the housing 36 toward the cover 38. This projecting part 36e is provided on the attachment part 36a in which the top groove 36c for accommodating the insertion protrusion 38a of the cover 38 is formed. This projecting part 36e fixes (properly speaking, temporarily fixies the cover for bonding) the cover 38. The projecting part 36e is referred to below as the fixing part 36e.

This fixing part 36e is a gate-shaped member extending from the attachment part 36a toward the cover 38. A projection 38e provided in the cover 38 is locked to a rectangular hole 36f of the fixing part 36e to fix (temporarily fix) the cover 38.

The cover 38 has the plurality of projections 38c arranged at a predetermined pitch and these projections 38c come in contact with the outer-side wall surface 36h of the top groove 36c, so the cover 38 is attached to the housing 36 without being horizontally moved or rotated.

It should be noted here that the projections 38c are provided on the outer surface of the cover 38 in the embodiment, but the projections 38c may be provided on the inner surface of the cover 38. In this case, the projections 38c come in contact with the inner-side wall surface 36j of the top groove 36c.

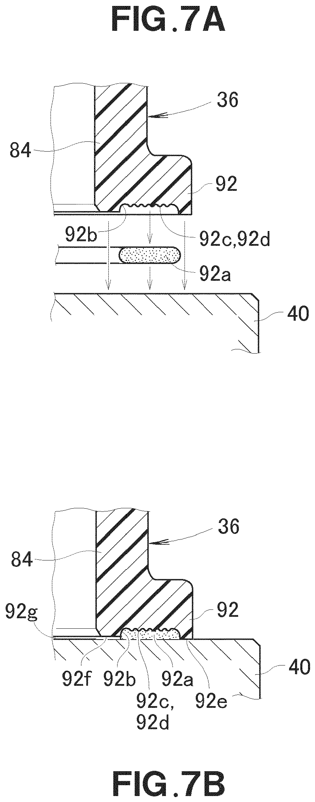

An enlarged view of a section 7b in Fig. 2 is illustrated in Fig. 7(b) and an exploded view of Fig. 7(b) is illustrated in Fig. 7(a).

As illustrated in Fig. 7(a), the peripheral wall part 84 of the housing 36 has a flange 92 that comes in contact with the base body 40, and the flange 92 overhangs toward the outer side from the peripheral wall part 84 and has a lower groove 92b for collecting an adhesive 92a in a surface close to the base body 40. In addition, a bottom surface 92c of the lower groove 92b is a coarse surface 92d.

The housing 36 is brought in contact with the base body 40 so that the adhesive 92a is accommodated in the lower groove 92b.

This bonds the adhesive 92a to the coarse surface 92d due to an anchor effect as illustrated in Fig. 7(b) and firmly bonds the housing 36 to the base body 40, thereby preventing interface peeling.

In addition, the surface of the flange 92 close to the base body 40 is divided by the lower groove 92b into an outer-side surface 92e and an inner-side surface 92f in Fig. 7(b) and a small gap 92g is provided between the inner-side surface 92f and the base body 40.

Since the excess portion of the adhesive 92a flows into the small gap 92g, there is no concern that the adhesive 92a enters the inside of the housing 36.

It should be noted here that openings are provided on the front side and the back side of the housing 36 in the embodiment, but one of these sides may be closed. That is, the housing 36 only needs to have an opening at least one side.

In addition, the resinous component 36 according to the invention may be applied to any device or apparatus in addition to the vehicle brake fluid pressure control device 10 and the use thereof is not limited to the embodiment. However, the resinous component 36 is more suitable for the vehicle brake fluid pressure control device 10 that particularly requires drip-proof performance.

### Industrial Applicability

The resinous component according to the invention is preferably applied to a vehicle brake fluid pressure control device.

### Reference Signs List

36: resinous component (housing)
36a: attachment part of housing in contact with base body
36b: adhesive
36c: top groove
36g: bottom surface of top groove
36h: outer-side wall surface of top groove
36j: inner-side wall surface of top groove
38: cover
38a: insertion protrusion provided in cover
38b: collecting groove provided in cover
38c: projection provided on insertion protrusion
40: base body
84: peripheral wall part
92: flange
92a: adhesive
92b: lower groove
92c: bottom surface of lower groove
92d: coarse surface
92e: outer-side surface
92f: inner-side surface
92g: small gap ensured between inner-side surface and base body
C1: outer-side gap
C2: inner-side gap
C3: bottom gap

## Claims

1. A resinous component comprising:
a box-shaped housing (36) having an opening; and
a cover (38) attached to the opening of the housing (36), the opening of the housing (36) has a top groove (36c) to be filled with an adhesive (36b),
the top groove (36c) includes a bottom surface (36g), an outer-side wall surface (36h) that rises from one end of the bottom surface (36g), and an inner-side wall surface (36j) that rises from the other end of the bottom surface (36g),
the cover (38) has an insertion protrusion (38a) to be inserted into the top groove (36c),
a bottom-side gap (C3) is ensured between the insertion protrusion (38a) and the bottom surface (36g), an outer-side gap (C1) is ensured between the insertion protrusion (38a) and the outer-side wall surface (36h) , and an inner-side gap (C2) is ensured between the insertion protrusion (38a) and the inner-side wall surface (36j),
the inner-side gap (C2) is larger than the outer-side gap (C1), and
wherein the housing (36) has a peripheral wall part (84) and a board accommodation part (85) in which a control board (99) is accommodated, **characterized in that**
the peripheral wall part (84) has a flange (92) that comes in contact with a base body (40),
the flange (92) overhangs toward an outer side from the peripheral wall part (84) and has, in a side close to the base body (40) , a lower groove (92b) to be filled with an adhesive (92a), and
an inner peripheral surface of the lower groove (92b) is a coarse surface.

2. The resinous component according to claim 1,
wherein the insertion protrusion (38a) further includes a projection (38c) that comes in contact with the outer-side wall surface (36h).

3. The resinous component according to claim 1 or 2,
wherein a surface of the flange (92) close to the base body (40) is divided by the lower groove (92b) into an outer-side surface (92e) on an outer side of the lower groove (92b) and an inner-side surface (92f) on an inner side of the lower groove (92b) and
a gap (92g) is provided between the inner-side surface (92f) and the base body (40).

## Patentansprüche

1. Harzhaltige Komponente, umfassend:
ein kastenförmiges Gehäuse (36) mit einer Öffnung; und
eine Abdeckung (38), die an der Öffnung des Gehäuses (36) befestigt ist,
wobei die Öffnung des Gehäuses (36) eine obere Nut (36c) aufweist, die mit einem Klebemittel (36b) zu füllen ist,
wobei die obere Nut (36c) eine Bodenoberfläche (36g), eine außenseitige Wandoberfläche (36h), die von einem Ende der Bodenoberfläche (36g) vorsteht, und eine innenseitige Wandoberfläche (36j) umfasst, die von dem anderen Ende der Bodenoberfläche (36g) vorsteht,
wobei die Abdeckung (38) einen Einführvorsprung (38a) aufweist, der in die obere Nut (36c) einzuführen ist,
wobei ein bodenseitiger Spalt (C3) zwischen dem Einführvorsprung (38a) und der Bodenoberfläche (36g) vorgesehen ist, ein außenseitiger Spalt (C1) zwischen dem Einführvorsprung (38a) und der außenseitigen Wandoberfläche (36h) vorgesehen ist und ein innenseitiger Spalt (C2) zwischen dem Einführvorsprung (38a) und der innenseitigen Wandoberfläche (36j) vorgesehen ist,
wobei der innenseitige Spalt (C2) größer ist als der außenseitige Spalt (C1), und
wobei das Gehäuse (36) einen peripheren Wandabschnitt (84) und einen Platinenaufnahmeabschnitt (85) aufweist, in dem eine Steuerplatine (99) aufgenommen ist,
**dadurch gekennzeichnet, dass**
der periphere Wandabschnitt (84) einen Flansch (92) aufweist, der mit einem Basiskörper (40) in Kontakt kommt,
der Flansch (92) in Richtung einer Außenseite von dem peripheren Wandabschnitt (84) überhängt und in einer Seite nahe dem Basiskörper (40) eine untere Nut (92b) aufweist, die mit einem Klebemittel (92a) zu füllen ist, und
eine innere periphere Oberfläche der unteren Nut (92b) eine raue Oberfläche ist.

2. Harzhaltige Komponente nach Anspruch 1,
wobei der Einführvorsprung (38a) ferner einen Vorsprung (38c) umfasst, der mit der außenseitigen Wandoberfläche (36h) in Kontakt kommt.

3. Harzhaltige Komponente nach Anspruch 1 oder 2,
wobei eine Oberfläche des Flansches (92) nahe dem Basiskörper (40) durch die untere Nut (92b) in eine außenseitige Oberfläche (92e) auf einer äußeren Seite der unteren Nut (92b) und eine innenseitige Oberfläche (92f) auf einer inneren Seite der unteren Nut (92b) unterteilt ist, und
ein Spalt (92g) zwischen der innenseitigen Oberfläche (92f) und dem Basiskörper (40) vorgesehen ist.

## Revendications

1. Composant résineux comprenant :
un logement en forme de boîte (36) ayant une ouverture ; et
un couvercle (38) fixé à l'ouverture du logement (36),
l'ouverture du logement (36) a une rainure supérieure (36c) destinée à être remplie par un adhésif (36b),
la rainure supérieure (36c) comprend une surface inférieure (36g), une surface de paroi côté externe (36h) qui s'élève depuis une extrémité de la surface inférieure (36g) et une surface de paroi côté interne (36j) qui s'élève depuis l'autre extrémité de la surface inférieure (36g),
le couvercle (38) a une protubérance d'insertion (38a) destinée à être insérée dans la rainure supérieure (36c),
un espace côté inférieur (C3) est ménagé entre la protubérance d'insertion (38a) et la surface inférieure (36g), un espace côté externe (C1) est ménagé entre la protubérance d'insertion (38a) et la surface de paroi côté externe (36h), et un espace côté interne (C2) est ménagé entre la protubérance d'insertion (38a) et la surface de paroi côté interne (36j),
l'espace côté interne (C2) est plus grand que l'espace côté externe (C1), et
dans lequel le logement (36) a une partie de paroi périphérique (84) et une partie de réception de carte (85) dans laquelle une carte de commande (99) est reçue, **caractérisé en ce que**
la partie de paroi périphérique (84) a une bride (92) qui vient en contact avec un corps de base (40),
la bride (92) surplombe vers un côté externe de la partie de paroi périphérique (84) et a, dans un côté proche du corps de base (40), une rainure inférieure (92b) destiné à être remplie d'un adhésif (92a), et
une surface périphérique interne de la rainure inférieure (92b) est une surface rugueuse.

2. Composant résineux selon la revendication 1,
dans lequel la protubérance d'insertion (38a) comprend en outre une saillie (38c) qui vient en contact avec la surface de paroi côté externe (36h).

3. Composant résineux selon la revendication 1 ou 2,
dans lequel une surface de la bride (92) proche du corps de base (40) est divisée par la rainure inférieure (92b) en une surface côté externe (92e) sur un côté externe de la rainure inférieure (92b) et une surface côté interne (92f) sur un côté interne de la rainure inférieure (92b) et
un espace (92g) est prévu entre la surface côté interne (92f) et le corps de base (40).
